Europäisches Patentamt

European Patent Office

Office européen des brevets

(11) Publication number: **0 350 245**
**A2**

# EUROPEAN PATENT APPLICATION

(21) Application number: 89306745.4

(51) Int. Cl.⁴: **G02B 6/44**

(22) Date of filing: 03.07.89

(30) Priority: 04.07.88 GB 8815894

(43) Date of publication of application:
**10.01.90 Bulletin 90/02**

(84) Designated Contracting States:
**AT BE CH DE ES FR GB GR IT LI LU NL SE**

(71) Applicant: **BICC Public Limited Company**
**Devonshire House Mayfair Place**
**London W1X 5FH(GB)**

Applicant: **CORNING LIMITED**
**Wear Glass Works**
**Sunderland SR4 6EJ(GB)**

(72) Inventor: **Pilkington, Ian**
**1 Maes Celwyn Coed-y-Glyn**
**Wrexham Clwyd LL13 7QG Wales(GB)**

(74) Representative: **Boon, Graham Anthony et al**
**Elkington and Fife Beacon House 113**
**Kingsway**
**London, WC2B 6PP(GB)**

(54) **Connecting device for use with optical fibres.**

(57) A device is described which comprises a housing (1) having openings through which a plurality of tubes (8, 8a; 30-38, 40-44) can communicate with the interior thereof. At least one of the tubes is such as to permit an optical fibre (20, 21) to be blown along it. Within the housing a hollow mandrel (11,60) is provided, the mandrel having a slot to enable the leading end portion of a fibre to be received in coiled form within the portion of a fibre to be received in coiled form within mandrel. Fibre may also be wound around the exterior of the mandrel. The mandrel thus provides a fibre storage means.

## CONNECTING DEVICE FOR USE WITH OPTICAL FIBRES

This invention relates to a connecting device for use with optical fibres. It is referred to below as a connection box. The invention is particularly applicable to optical fibres which are installed in a tube by blowing. Such fibres are generally referred to as blown fibres. The tubes are installed first and the blown fibres are subsequently introduced into those tubes by blowing. The term "blowing" as used herein is intended to encompass a method in which blowing is replaced or supplemented by sucking to produce the necessary current of air or other gas.

One of the virtues of using blown fibres is that the paths followed by the fibres can be altered from time to time to meet changed circumstances and fibres can be introduced into tubes which have already been installed. This versatility is not readily obtainable using fibres installed by conventional means. It is an object of the present invention to provide a connection box which facilitates the installation of fibres in a variety of configurations and enables that configuration readily to be varied.

According to the present invention there is provided a connecting device which comprises a housing having means for allowing at least two tubes to communicate with the interior thereof, at least one of the tubes being such as to permit an optical fibre to be blown therealong, and fibre storage means within the housing for receiving a leading portion of a fibre blown along the said at least one tube.

Preferably the fibre storage means comprises a mandrel having a hollow interior within which coiled fibre can be stored and around the outside of which fibre can be wound.

In the accompanying drawings:

Figure 1 is a front view of a first embodiment of the invention;

Figure 2 is a side view of the embodiment of Figure 1;

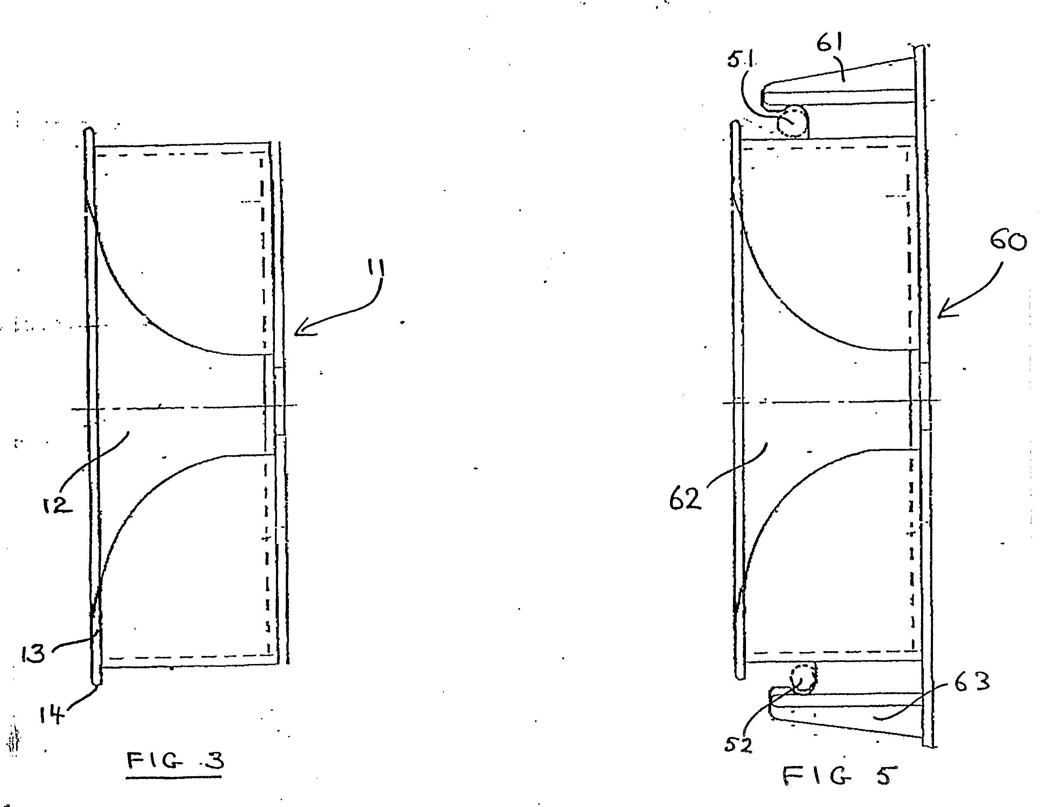

Figure 3 is a view taken in the direction of arrow A in Figure 1 showing the mandrel on a larger scale;

Figure 4 is a front view of a second embodiment of the invention illustrating a number of possible configurations in a single drawing;

Figures 4a to 4f are views corresponding to Figure 4, but each illustrating only a single configuration; and

Figure 5 shows, on a larger scale, the mandrel employed in Figure 4 as viewed in the direction of arrow B in Figure 4.

It should be understood that both embodiments would, in fact, have a cover closing off the interior thereof, and the drawings show the embodiments with this cover removed so that the interior can be seen.

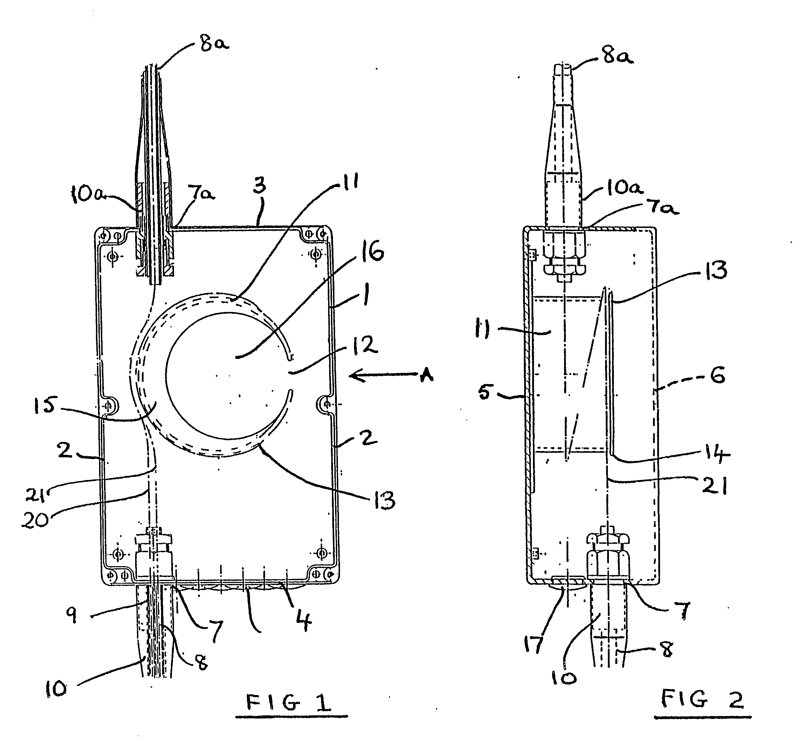

The embodiment of Figure 1 comprises a housing 1 having side walls 2 a top wall 3, a bottom wall 4 and a back wall 5. A cover 6 forming a front wall is indicated in Figure 2.

An opening 7 is provided in the bottom wall 4 and a tube 8 suitable for having a fibre blown therealong communicates with the interior of the housing 1 through the opening 7. The tube 8 is contained within a duct 9, which is usually in the form of a tightly fitting sheath. A single duct 9 can house a plurality of tubes 8, but in this instance it is shown as housing just a single tube. The duct 9 is held in place in the opening 7 by means of a clamp arrangement 10, the details of which are irrelevant for the purposes of the present invention, at least as far as this embodiment is concerned.

A second opening 7a is provided in the top wall 3, and through this enters a tail tube 8a. The duct is retained in the opening 7a by a clamp arrangement 10a. The tail tube 8a is relatively short. It is not intended that fibre should be blown through it, but rather that it should be pushed through. However, blowing may be employed if required.

A generally cylindrical mandrel 11 is secured to the rear wall 5. The mandrel has hollow interior which is accessible through a slot 12 which extends parallel to the longitudinal axis of the mandrel. A crescent-shaped flange 13 is provided over the major portion of the front edge of the mandrel. The flange 13 extends outwardly beyond the outer circumference of the cylindrical mandrel to form an outwardly extending lip 14 and extends inwardly beyond the inner circumference of the cylindrical mandrel so as to form an inwardly extending lip 15. There is thus defined within the mandrel 11 a storage chamber 16 to which access can be obtained both through the slot 12 and through the circular opening which is defined by the inner edge of the flange 13 and which can be seen in Figure 1. The features of the mandrel are smoothly contoured to prevent accidental damage to fibres during use.

A plurality of further openings are provided in the bottom wall 4, each closed with a grommet 17. If it is desired to introduce blown fibres from additional tubes the requisite number of grommets can be removed and the additional tubes inserted. As an alternative to having additional openings closed by grommets, the housing may be provided with preformed knock-outs, i.e. each at locations where an additional opening may be needed a line of weakness is provided to enable material to be readily removed from the housing to provide the opening.

Two blown fibres are introduced into the tube 8 from the upstream end thereof and propelled along the tube by a current of air. The leading ends of the fibres emerge from the tube 8 into the connection box, where they are indicated in the drawings by reference numerals 20 and 21. In the configuration illustrated, the leading end of fibre 21 is wound one or more times around the cylindrical external surface of the mandrel 11 and is then inserted into the tail tube 8a. However, if preferred the fibre may pass straight into the tail tube. An optical connector can then be attached to the leading end of the fibre 21 to enable it to be connected, for example, to some item of equipment or to another fibre. The leading end of the fibre 20 travels around the outside of the mandrel 11 over an angle of slightly more than $180°$ and is then inserted into the storage chamber 16. A leading portion of this fibre is coiled up in the chamber 16 ready for subsequent use. Thus, the fibre 20 is available for subsequent insertion into the tail tube 8a or for insertion into some other tail tube which might be mounted on the box. It will be appreciated that a portion of the fibre 21 can also be said to be stored in the connecting device, this time around the outside of the mandrel. For example, should the attachment of the optical connector to the fibre 21 prove to be faulty it can be cut off and a turn (or one or more of the turns) of the fibre 21 around the mandrel 11 can be taken off the mandrel and fed through the tail tube to provide an additional amount of fibre for a fresh attempt at attachment of the optical connector to be made. The outwardly extending lip 14 prevents the turns of the fibre 21 sliding off the mandrel, and the inwardly directed lip 15 prevents the fibre in the storage chamber 16 coming out.

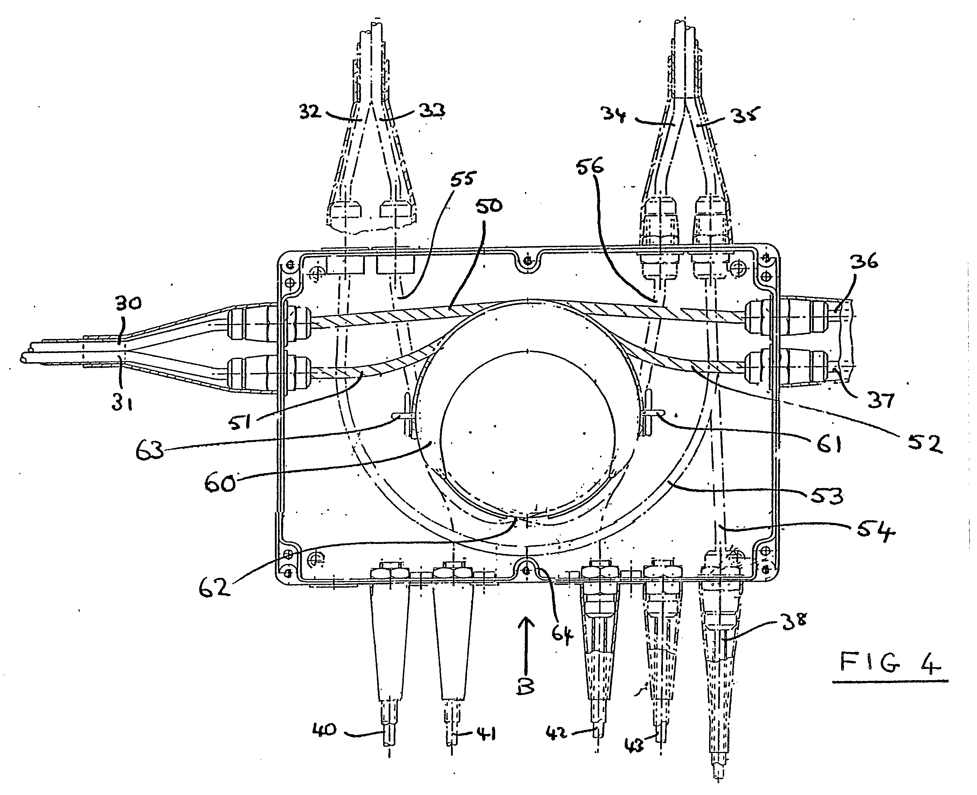

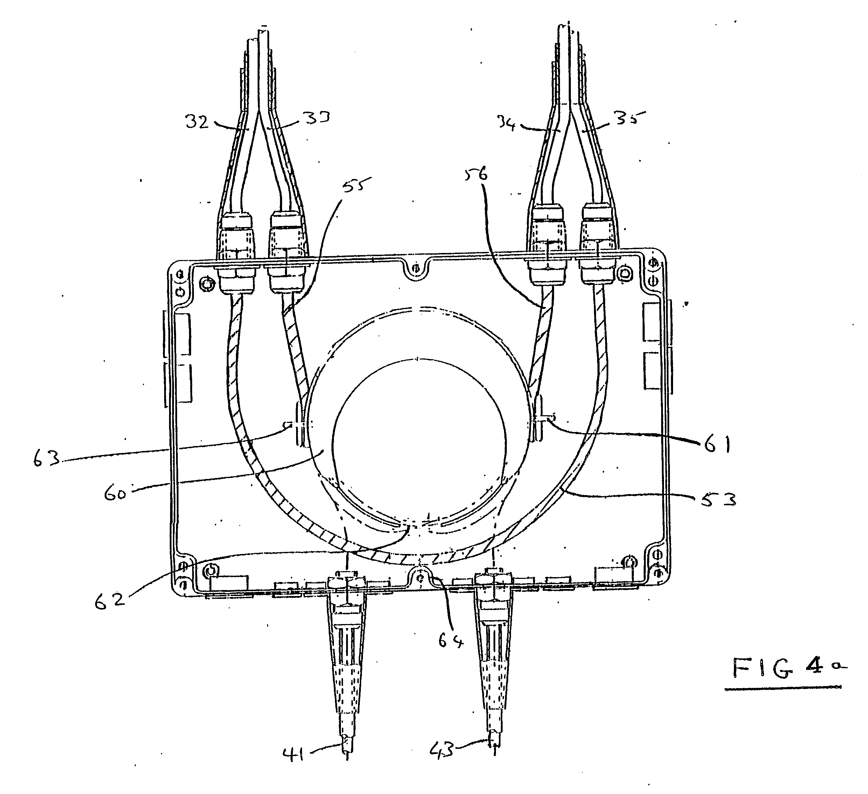

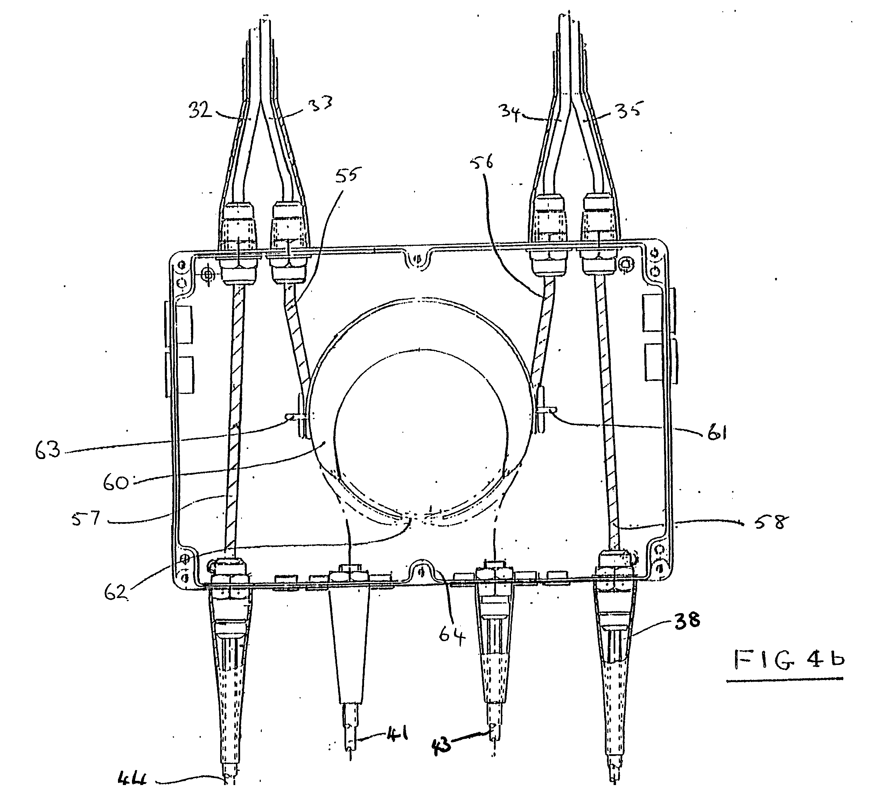

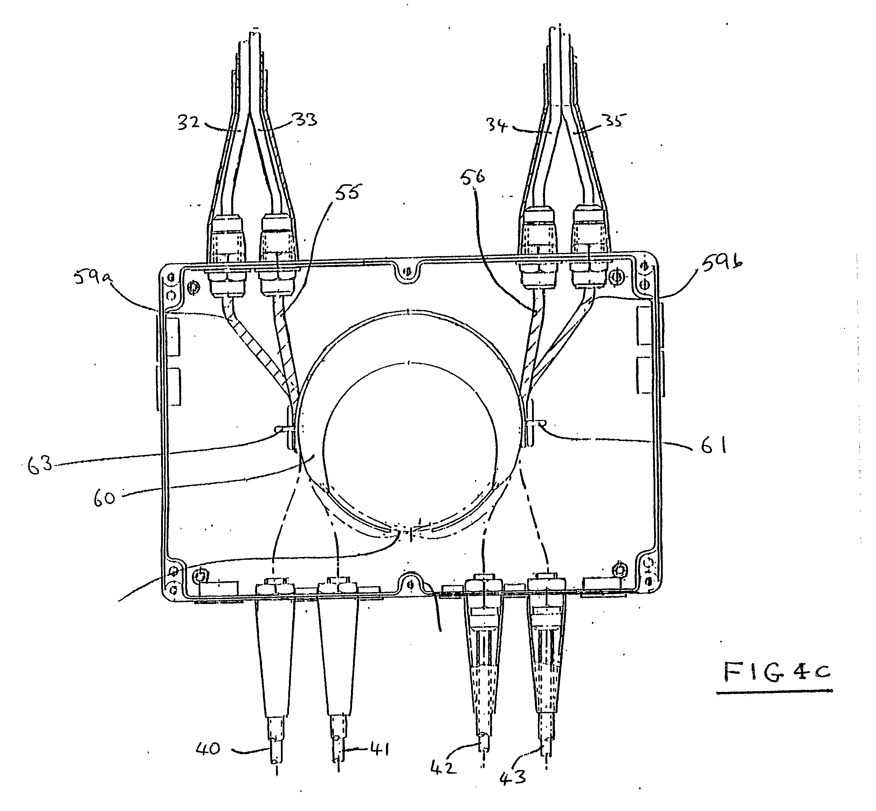

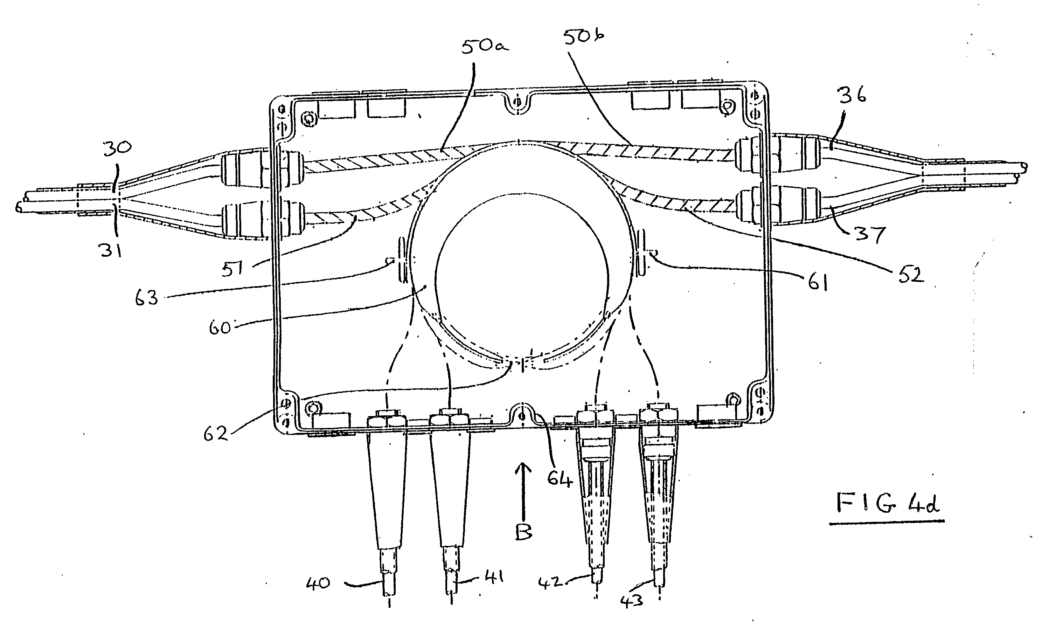

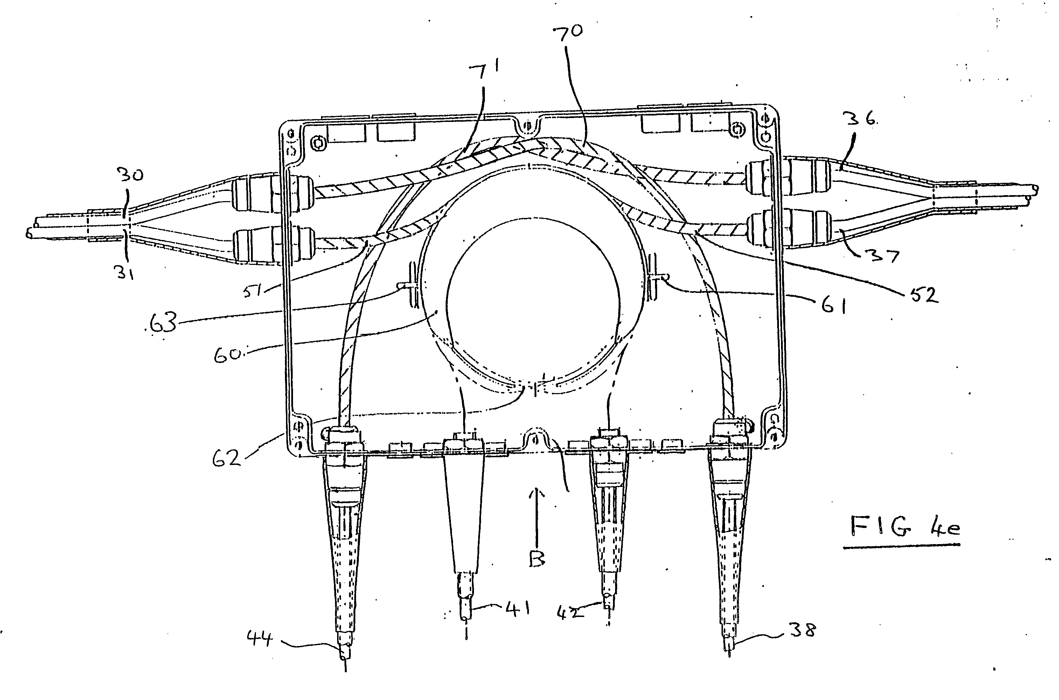

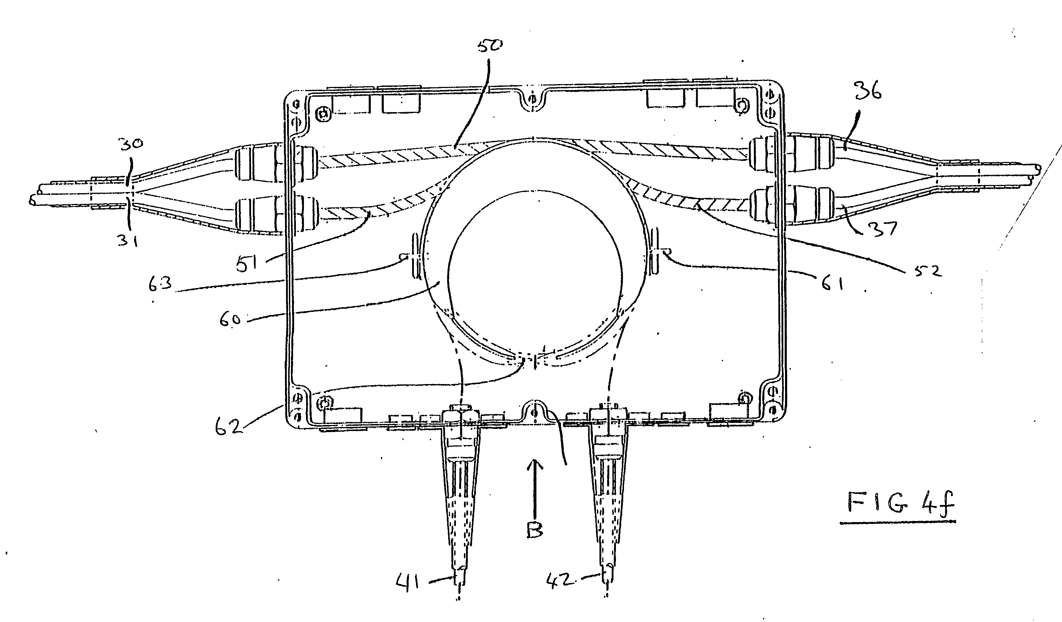

Figures 4 and 5 show a rather more complex type of connection box which uses a circular mandrel 60 largely similar in construction to the mandrel 11 shown in Figures 1 and 2 which offers a larger number of possibilities. In the embodiment of Figures 4 and 5 the clamp arrangements by which the ducts are held in place on the housing are of a type which permits the box to be reconfigured in various arrangements, and it may, for example, employ push-fit connectors details of which are given in our copending European Application filed 30th June, 1989 claiming priority from U.K. application No. 8815741.7 by means of which tubes from outside the box can be releasably connected to tubes running within the box. Figure 4 shows two alternative ways for pairs of twin blowing tubes to enter the enclosure either from the side or from the top, and a single blowing tube 38 also communicates with it. Four tail tubes 40, 41, 42 and 43 are provided.

When side entry is used, the blowing tubes 30 and 36 are interconnected by a short length of blowing tube 50, so that a fibre blown in through one or other of tubes 30 and 36 can be blown straight through the box and out through the other of the tubes 30 and 36. Where the blowing tube 31 enters the box a short length of tube 51 is attached which passes around part of the outside of the mandrel and is attached thereto by a clip 61. Fibre blown in through tube 31 passes through tube 51 and emerges from the end of tube 51 at the clip 61. As shown in the drawings, this can then pass into tail tube 42 or it can enter the storage area within the mandrel 60 via the slot 62. Similarly, a short length of tube 52 is provided where blowing tube 37 enters the box, and this passes around the outside of the mandrel 60 and terminates at a clip 63. Fibre blown in through the tube 37 continues through the tube 52 and emerges in the region of the clip 63. It can then either leave the box through the tail tube 41 or it can enter the storage area within the mandrel 60 through the slot 62.

When top entry is used, the blowing tube 32 communicates with the tube 35 via a roughly semi-circular loop of tube 53. This enables fibre to be blown in through one or other of tubes 32 and 35 and emerge through the other of the tubes 32 and 35 having travelled through the tube 64. In this way the fibre can be blown through the box. An inwardly directed lug 64 is provided to keep the loop of tube 53 at the right position.

It is important that sharp corners should be avoided, both from the point of view of ease of blowing and from the point of view of avoiding the degradation in transmission properties which occurs when an optical fibre is bent sharply. As can be seen from Figure 4, all of the tube and fibre routes within the enclosure follow gently curving paths. The minimum bend radius is preferably not less than about 40 mm.

In the case of tube 35 an alternative possibility is also illustrated, which is that it may be connected to the tube 38 through a short length of tube 54.

Tube 33 communicates with a short length of tube 55 which terminates at the clip 63. The fibre from the tube 33 passes through the tube 55 and then enters the storage area within the mandrel 60 through the slot 62. The same is true of the fibre entering through tube 34 and then travelling through a short length of tube 56 which terminates at the clip 61.

Tail tubes 40 and 43 are shown as being unoccupied and provide reserve capacity.

For ease of understanding, Figures 4a to 4f each show one of the configurations covered by Figure 4, as well as some configurations not specifically shown in Figure 4 but which the device of Figure can provide. These are :

Figure 4a : Top entry for two pairs of blowing tubes 32, 33, 34, 35, bottom entry for two tail tubes 41, 43. The fibre or fibres from tube 32 pass directly into tube 35 or vice versa, via a length of blowing tube 53. There are two fibres in each of tubes 33 and 34, and in each case one is stored in the mandrel 60 and one passes to a respective tail tube.

Figure 4b : Top entry for two pairs of blowing tubes 32, 33, 34, 35, bottom entry for two tail tubes, 41, 43 and two blowing tubes 38, 44. The fibre or fibres from each of tubes 32 and 35 pass directly into a respective one of blowing tubes 44 and 38 or vice versa, via a respective length of blowing tube 57 or 58. There are two fibres in each of tubes 33 and 34, and in each case one is stored in the mandrel 60 and one passes to a respective tail tube.

Figure 4c : Top entry for two pairs of blowing tubes 32, 33, 34, 35, bottom entry for four tail tubes 40, 41, 32, 43. One fibre from each tube is stored in the mandrel 60 and one passes to a respective tail tube 40, 41, 42, 43.

Figure 4d : Side entry for two pairs of blowing tubes 30, 31, 36, 37, bottom entry for four tail tubes 40, 41, 42, 43. Each blowing tube has two fibres. These pass to the mandrel 60 via lengths of blowing tubes 50a, 51, 50b, 52. One fibre from each tube is stored in the mandrel 60 and one passes to a respective one of the tail tubes.

Figure 4e : Side entry for two pairs of blowing tubes 30, 31, 36, 37 bottom entry for two tail tubes 41, 42, and two blowing tubes 38, 44. The fibre or fibres from each of tubes 30 and 31 pass directly into tubes 38 and 44 respectively, or vice versa, via lengths of blowing tubes 70 and 71. There are two fibres in each of tubes 31 and 37. These pass to the mandrel 60 via lengths of blowing tube 51, 52. One fibre from each tube is stored in the mandrel 60 and one passes to a respective tail tube 41, 42.

Figure 4f : Side entry for two pairs of blowing tubes 30, 31, 36, 37, bottom entry for two tail tubes 41, 42. The fibre or fibres from tube 30 pass directly into tube 36, or vice versa, via a length of blowing tube 50. There are two fibres in each of tubes 31 and 37, and in each case one is stored in the mandrel 60 and one passes to a respective tail tube 41, 42 via a respective length of blowing tube 51, 52.

It will be appreciated that the configurations just described are only some examples of many different ways in which the blowing tubes and tail tubes could be connected to one another and the fibres within the blowing tubes could be directed. It will also be appreciated that as and when it may be necessary the configuration used can be changed and use can be made of fibre which has been stored in the storage area within the mandrel 60. Also, although not shown, the external surface of the mandrel 60, like that of the mandrel 11 in Figures 1 and 2, provides a storage area by virtue of the fact that a fibre entering the box from one of the blowing tubes can be passed in one or more turns around the outside of the mandrel before leaving the box through one of the tail tubes.

It should be noted that although the above description refers to the use of a box-type housing, the housing could be of some other type, for example it could be constituted by a rack.

## Claims

1. A connecting device which comprises a housing (1) having means for allowing at least two tubes (8,8a; 30-38, 40-44) to communicate with the interior thereof, at least one of the tubes being such as to permit an optical fibre (20, 21) to be blown therealong, and fibre storage means (11; 60) within the housing for receiving a leading portion of a fibre blown along the said at least one tube.

2. A device according to claim 1, wherein the housing (1) is in the form of a box having at least two openings therein for the tubes to communicate with the interior thereof.

3. A device according to claim 2, wherein the housing (1) has openings in at least two opposed walls thereof.

4. A device according to claim 2 or 3, wherein the housing has openings in at least two walls which run transversely to one another.

5. A device according to any preceding claim, wherein the fibre storage means (11; 60) comprises a member having an exterior surface around which fibre is wound to store it.

6. A device according to any one of claims 1 to 4, wherein the fibre storage means (11; 60) comprises a hollow member having a slot (12; 62) to permit the leading portion of a fibre to enter the hollow member.

7. A device according to claim 6, wherein the hollow member comprises a storage portion which is generally cylindrical in cross-section, the said slot (12; 62) running generally parallel to the longitudinal axis of the storage portion.

8. A device according to claim 7, wherein the hollow member further comprises a flange (15) which extends at least radially inwardly and/or radially outwardly from the cylindrical surface of the storage portion to assist in retaining fibre within the hollow member and/or enable fibre to be stored on the exterior of the hollow member.

9. A device according to any preceding claim, wherein the fibre storage means (11; 60) is provided with tube retaining means (61, 63) to enable a length of tube (51,52,55,56,59a,59b,50a,50b) to be connected between the fibre storage means and the locations at which the fibres enter the housing.

10. A device according to claim 9, wherein the tubes (30-38, 40-44) exterior of the housing are connected the tube or tubes (51, 52, 55, 56, 59a, 59b, 50a, 50b) interior of the housing by releasable connectors.

11. A device according to any preceding claim wherein the housing is provided by a rack.

12. An optical fibre storage means (11; 60) for storing an end portion of an optical fibre, which comprises a hollow member having a slot (12; 62) to permit the leading portion of a fibre to enter the hollow member.

13. A storage means according to claim 120, wherein the hollow member comprises a storage portion which is generally cylindrical in cross-section, the said slot (12; 62) running generally parallel to the longitudinal axis of the storage portion.

14. A storage means according to claim 13, wherein the hollow member further comprises a flange (15) which extends at least radially inwardly and/or radially outwardly from the cylindrical surface of the storage portion to assist in retaining fibre within the hollow member and/or enable fibre to be stored on the exterior of the hollow member.

15. A storage means according to any one of claims 12 to 14, wherein the fibre storage means (11; 60) is provided with tube retaining means (61, 63) to enable a length of tube (51,52,55,56,59a,59b,50a,50b) to be connected between the fibre storage means and the locations at which the fibres enter the housing.

FIG 1

FIG 2

FIG 3

12

13

14

11

51  61

62

52

60

63

FIG 5

EP 0 350 245 A2

EP 0 350 245 A2

32  33        55      50        56        34  35

30                                              36

31

51

63

60                                              61    52

62                                              53

64                                              54

40    41    42    43                            38

FIG 4

FIG 4a

FIG 4b

FIG 4c

FIG 4d

FIG 4e

EP 0 350 245 A2

FIG 4f

EP 0 350 245 A2